# DEMANDE DE BREVET EUROPEEN

(11) **EP 0 818 477 A1**
(43) Date de publication de la demande: **14.01.1998**
(21) Numéro de dépôt: 97401526.5
(22) Date de dépôt: 01.07.1997
(51) Int. Cl.: C08F 210/10, C08K 3/00, C08K 3/22, C08K 5/09, F16L 11/00

(54) **Elastomère et son application à un tuyau de transport de fluide**

(30) Priorité: 09.07.1996 FR 9608511
(71) Demandeur: HUTCHINSON, F-75008 Paris (FR)
(72) Inventeur: Mounier, Jean-Yves, 45200 Paucourt (FR)
(74) Mandataire: Ramey, Daniel

(57) **Abrégé**

Elastomère pour un tuyau de transport de fluide, tel par exemple qu'un tuyau d'un circuit de climatisation pour véhicule automobile, cet élastomère étant essentiellement formé d'un terpolymère d'isobutylène, de paraméthylstyrène et de parabromométhylstyrène associé avant vulcanisation à un agent absorbeur d'acidité, cet élastomère ayant après vulcanisation une faible déformation rémanente en compression garantissant l'étanchéité du montage d'un tuyau sur un embout rigide de connexion.

## Description

L'invention concerne un élastomère, utilisable en particulier dans un tuyau de transport de fluide d'un circuit de climatisation, de direction assistée, de freinage, de refroidissement, etc... pour véhicules automobiles, et les tuyaux réalisés avec cet élastomère.

L'invention concerne également les tuyaux réalisés à partir de cet élastomère pour le transport de fluides dans l'industrie du bâtiment, des transports en commun et dans tout domaine technique où l'étanchéité, l'imperméabilité, l'amortissement des vibrations et/ou la tenue thermique sont recherchés.

Les tuyaux de transport de fluide réalisés pour l'industrie automobile doivent respecter des normes de plus en plus sévères, notamment en ce qui concerne leur imperméabilité vis-à-vis du fluide transporté et de l'humidité, de leur souplesse (réduction de la transmission des vibrations), de leur tenue thermique (interne et externe) et de leur résistance aux agents extérieurs.

Leur durée de vie doit être aussi longue que possible, et leurs qualités d'étanchéité et d'imperméabilité doivent être maintenues pendant toute leur durée de vie.

On a déjà proposé des tuyaux de ce type qui comprennent, de l'intérieur vers l'extérieur, une couche interne de matière thermoplastique, en général de polyamide, une couche d'élastomère, un renforcement textile et un revêtement extérieur de protection en matière plastique ou en élastomère, mais ces tuyaux connus ne respectent pas les nouvelles normes imposées par les constructeurs automobile, notamment dans le cas des tuyaux de circuits de climatisation ou de conditionnement d'air dans lesquels les fluides réfrigérants utilisés jusque-là, qui contenaient des CFC, ont été remplacés par un HFC (connu sous la dénomination R134a) associé à un lubrifiant du type polyalkylène glycol présentant une très forte hygroscopie.

Ces tuyaux sont en général montés par serrage ou par sertissage sur des embouts tubulaires de matière rigide et, pour conserver la qualité d'étanchéité de leur montage au cours du temps, doivent avoir une déformation rémanente en compression aussi faible que possible.

Des essais ont montré que les élastomères actuellement disponibles sur le marché pouvaient permettre, dans certains cas, de respecter les nouvelles normes d'imperméabilité et de souplesse, mais que les tuyaux réalisés étaient incapables de conserver une étanchéité satisfaisante à leur montage sur des embouts tubulaires rigides, d'où des risques de fuite relativement élevés au niveau des connexions de ces tuyaux.

L'invention a notamment pour but d'apporter une solution simple et efficace aux problèmes précités.

Elle a pour objet un élastomère, en particulier pour un tuyau de transport de fluide, qui présente une faible déformation rémanente en compression en plus des qualités recherchées d'imperméabilité, d'amortissement des vibrations, de tenue thermique et de résistance aux agents extérieurs.

Elle a également pour objet un tuyau de transport de fluide utilisable notamment dans l'industrie automobile et destiné plus particulièrement à des circuits de climatisation, de direction assistée, de freinage ou de refroidissement répondant aux nouvelles normes des constructeurs automobiles.

Elle propose donc, à cet effet, un élastomère, en particulier pour un tuyau de transport de fluide destiné à être monté à étanchéité sur un embout tubulaire de matière rigide, caractérisé en ce que l'élastomère comprend essentiellement un terpolymère d'isobutylène, de paraméthylstyrène et de parabromométhylstyrène, associé avant vulcanisation à un agent absorbeur d'acidité susceptible de réduire la déformation rémanente en compression de l'élastomère vulcanisé.

On a constaté que la vulcanisation à chaud de cet élastomère s'accompagnait d'une formation d'acide et qu'il s'établissait un équilibre entre le polymère et les agents de vulcanisation d'une part et le produit vulcanisé et l'acide dégagé par la réaction de vulcanisation d'autre part. L'addition d'un agent absorbeur d'acidité à l'élastomère avant vulcanisation permet de déplacer cet équilibre et d'améliorer ou d'augmenter la vulcanisation, ce qui améliore d'une part l'élasticité du produit final et, d'autre part, la conservation de ses qualités mécaniques dans le temps.

En particulier, un tel élastomère présente une très faible déformation rémanente en compression et est particulièrement approprié au maintien de l'étanchéité du montage d'un tuyau souple sur un embout tubulaire rigide.

On a vérifié par exemple que l'élastomère précité avait une déformation rémanente en compression de 50-90 % environ après avoir passé 70 heures à 100°C quand il ne comprenait pas l'agent absorbeur d'acidité au moment de sa vulcanisation, cette déformation rémanente en compression étant réduite à 7-10 % environ dans les mêmes conditions par addition de l'agent absorbeur d'acidité avant vulcanisation.

Dans une forme de réalisation préférée de l'invention, l'agent absorbeur d'acidité est un complexe de magnésium et d'aluminium du type (Mg₁₋ₓ Alₓ COH)₂ (C0₃)_{x/2}.mH₂O, où x est compris entre 0 et 0,5 environ.

En variante, il est également possible d'utiliser un autre agent absorbeur d'acidité, choisi parmi la litharge, l'oxyde de plomb, l'oxyde de magnésium et un phtalate dibasique de plomb.

La quantité d'agent absorbeur précité est comprise entre 1 et 4 parts environ pour 100 parts en poids du terpolymère d'isobutylène, de paraméthylstyrène et de parabromométhylstyrène avant vulcanisation.

L'invention propose également un tuyau de transport de fluide, comprenant au moins une couche de matière thermoplastique, en particulier de polyamide, et au moins une couche d'élastomère, caractérisé en ce que l'élastomère est celui défini ci-dessus.

Dans un mode de réalisation destiné à un circuit de climatisation de véhicule automobile, ce tuyau comprend également une couche de renforcement textile, une couche extérieure de revêtement du renforcement textile, formée de l'élastomère précité, et une couche interne de l'élastomère précité, revêtant la surface intérieure de la couche de polyamide.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en perspective d'un tuyau selon l'invention ;
- la figure 2 est une vue schématique en perspective d'un autre mode de réalisation d'un tuyau selon l'invention.

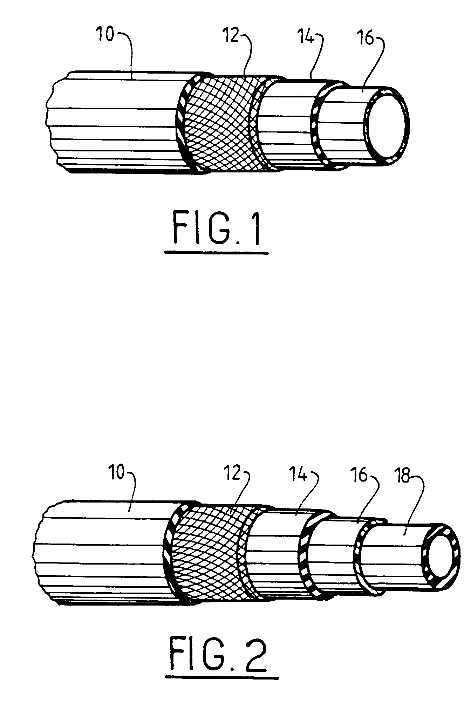

Le tuyau représenté en figure 1 est typiquement un tuyau de transport de fluide réfrigérant pour un circuit de climatisation de véhicule automobile et il comprend un revêtement extérieur 10 de protection en élastomère, qui recouvre un renforcement textile 12 du type tressé ou guipé par exemple, formé lui-même autour d'une couche 14 d'élastomère recouvrant une couche 16 d'une matière thermoplastique telle qu'un polyamide, qui constitue la paroi interne du tuyau.

L'élastomère utilisé dans le tuyau de la figure 1 est essentiellement un terpolymère d'isobutylène, de paraméthylstyrène et de parabromométhylstyrène et forme le composant principal des couches 10 et 14 (l'utilisation d'un même élastomère pour ces couches permettant de réduire les problèmes d'adhérence entre couches).

Ce terpolymère d'isobutylène, de paraméthylstyrène et de parabromométhylstyrène comprend, avant vulcanisation, une faible quantité d'un agent absorbeur d'acidité tel notamment qu'un complexe de magnésium et d'aluminium ayant une formule générale du type (Mg₁₋ₓ Alₓ COH)₂ (C0₃)_{x/2}.mH₂O où x est compris entre 0 et 0,5 environ, la quantité de cet agent dans l'élastomère étant de l'ordre de 1 à 4 parts environ pour 100 parts en poids du terpolymère précité.

L'acide qui est dégagé lors de la vulcanisation à chaud de cet élastomère est absorbé par l'agent précité, ce qui favorise la vulcanisation par déplacement d'un équilibre réactionnel entre le polymère et les agents de vulcanisation d'une part et le produit vulcanisé et l'acide formé d'autre part, avec pour conséquence une amélioration notable de la DRC (déformation rémanente en compression) de l'élastomère vulcanisé.

Par exemple, le même élastomère peut avoir une DRC de 50-90 % après 70 heures à 100°C quand il ne comprend pas l'agent précité, et une DRC de l'ordre de 7 à 10 % dans les mêmes conditions d'essai quand il contient environ 2,5 parts en poids de l'agent précité pour 100 parts du terpolymère.

A la place du complexe magnésium-aluminium précité, on peut utiliser d'autres agents absorbeurs d'acidité tels que par exemple la litharge, l'oxyde de plomb Pb₃O₄, l'oxyde de magnésium MgO et un phtalate dibasique de plomb.

Dans le tuyau de la figure 1, la couche interne de polyamide est de préférence rendue adhérente à la couche d'élastomère 14 par application d'une matière adhésive telle qu'une dissolution à base de CSM par exemple, sur la surface externe de la couche de polyamide 16.

Le renforcement textile 12, qui permet de garantir des pressions de service élevées de ce tuyau, est avantageusement en fil de polyamide auquel on applique par trempage ou imprégnation un traitement du type RFL (résine formaldéhyde latex), par exemple à base de polychloroprène, pour améliorer son adhérence aux couches 10 et 14 d'élastomère.

Dans l'autre forme de réalisation représentée en figure 2, le tuyau comprend, outre les couches 10, 12, 14 et 16 déjà décrites, une couche interne 18 du même élastomère que les couches 10 et 14, cette couche interne 18 recouvrant la surface interne de la couche de polyamide 16 pour améliorer la qualité et la durée de l'étanchéité du montage du tuyau sur un embout rigide (par exemple métallique) de connexion.

L'adhérence entre les couches 16 et 18 peut être renforcée par application de la même matière adhésive qu'indiquée ci-dessus.

Dans les tuyaux des figures 1 et 2, la couche 16 est en un alliage à base de polyamide choisi pour présenter un bon compromis entre la souplesse requise et l'imperméabilité au fluide transporté, l'épaisseur de cette couche 16 étant typiquement de l'ordre de 0,1 à 0,3 mm.

Les épaisseurs des couches d'élastomère sont par exemple de 0,5 à 2 mm (de préférence de l'ordre de 0,8 mm) pour la couche interne 18, de 0,2 à 0,8 mm (de préférence de l'ordre de 0,4 mm) pour la couche intermédiaire 14, et de 1 à 3 mm (de préférence environ 1,5 mm) pour la couche extérieure 10.

Ces tuyaux présentent une très faible perméabilité au liquide réfrigérant formé de R134a et de polyalkylène glycol, grâce à la couche 16 à base de polyamide ou d'alliage de polyamide et à la très faible déformation rémanente en compression de l'élastomère des couches 10, 14 et 18, qui assure le maintien dans le temps de l'étanchéité par sertissage sur un embout rigide de connexion.

L'imperméabilité à l'humidité ou à la vapeur d'eau de ces tuyaux est excellente, les différentes couches d'élastomère 10, 14 et 18 étant à base de caoutchouc butyle qui est actuellement l'élastomère connu ayant la meilleure imperméabilité aux gaz.

Cet élastomère est également celui qui possède les meilleures caractéristiques d'amortissement des vibrations. Ces caractéristiques sont améliorées quand les couches d'élastomère sont associées à un renforcement textile à base de polyamide, les fils de polyamide ayant de bonnes caractéristiques d'allongement et de tenue en fatigue ce qui permet et favorise un bon amortissement dynamique des vibrations et des pulsations de circulation du liquide dans les tuyaux selon l'invention.

D'autres avantages de ces tuyaux sont indiqués ci-dessous :
- une absence de chlore dans l'élastomère utilisé, ce qui répond à un désir des constructeurs automobiles,
- un poids réduit, en raison de la faible densité de l'élastomère et de la forte ténacité du fil de polyamide pour le renforcement textile 12,
- une très bonne tenue en température et une très bonne résistance aux agents extérieurs (oxygène, ozone, ultra-violets, etc...).

De façon générale, les tuyaux selon l'invention sont également utilisables dans des circuits de direction assistée, de freinage, de refroidissement, etc..., chaque fois que l'étanchéité de leur montage sur des embouts rigides de connexion doit être conservée sur un laps de temps important.

## Revendications

1. Elastomère, en particulier pour un tuyau de transport de fluide destiné à être monté à étanchéité sur un embout tubulaire de matière rigide, caractérisé en ce que l'élastomère comprend essentiellement un terpolymère d'isobutylène, de paraméthylstyrène et de parabromométhylstyrène, associé avant vulcanisation à un agent absorbeur d'acidité susceptible de réduire la déformation rémanente en compression de l'élastomère vulcanisé.

2. Elastomère selon la revendication 1, caractérisé en ce que l'agent absorbeur d'acidité est un complexe de magnésium et d'aluminium du type (Mg₁₋ₓ Alₓ COH)₂ (C0₃)_{x/2}.mH₂O, où x est compris entre 0 et 0,5 environ.

3. Elastomère selon la revendication 1, caractérisé en ce que l'agent absorbeur d'acidité est choisi parmi la litharge, l'oxyde de plomb, l'oxyde de magnésium et un phtalate dibasique de plomb.

4. Elastomère selon l'une des revendications précédentes, caractérisé en ce que la quantité d'agent précité est comprise entre 1 et 4 parts environ pour 100 parts en poids du terpolymère précité avant vulcanisation.

5. Tuyau de transport de fluide, comprenant au moins une couche (16) de matière thermoplastique, en particulier de polyamide, et au moins une couche d'élastomère (10, 14 ou 18), caractérisé en ce que l'élastomère est celui défini dans l'une des revendications précédentes.

6. Tuyau selon la revendication 5, caractérisé en ce qu'il comprend également une couche (12) de renforcement textile et une couche extérieure (10) de revêtement du renforcement textile, cette couche extérieure de revêtement étant formée de l'élastomère précité.

7. Tuyau selon la revendication 5 ou 6, caractérisé en ce qu'il comprend une couche interne (18) de l'élastomère précité, recouvrant la surface interne de la couche de polyamide.

8. Tuyau selon l'une des revendications 5 à 7, caractérisé en ce que l'adhérence entre le polyamide et l'élastomère est améliorée par application d'une matière adhésive, telle par exemple qu'une dissolution à base de CSM.

9. Tuyau selon l'une des revendications 5 à 8, caractérisé en ce que le renforcement textile (12) est en fil de polyamide.

10. Tuyau selon la revendication 9, caractérisé en ce que le fil de polyamide a subi un traitement du type RFL (résine formaldéhyde latex) par exemple à base de polychloroprène.

11. Tuyau selon l'une des revendications 5 à 10, caractérisé en ce que l'épaisseur de la couche (16) de polyamide est de l'ordre de 0,1 à 0,3 mm.

12. Tuyau selon l'une des revendications 5 à 11, caractérisé en ce qu'il est destiné à être utilisé dans un circuit de climatisation de véhicule automobile.
